# EUROPÄISCHE PATENTSCHRIFT

(11) **EP 1 407 966 B1**
(45) Veröffentlichungstag und Bekanntmachung des Hinweises auf die Patenterteilung: **25.01.2006**
(21) Anmeldenummer: 03022535.3
(22) Anmeldetag: 02.10.2003
(51) Int. Cl.: B64D 13/06, F28F 19/00, F28D 9/00

(54) **Kondensor**
Condenser
Condenseur

(30) Priorität: 10.10.2002 DE 10247335
(43) Veröffentlichungstag der Anmeldung: 14.04.2004
(73) Patentinhaber: Liebherr-Aerospace Lindenberg GmbH, 88161 Lindenberg/Allgäu (DE)
(72) Erfinder: Haas, Joachim, 88239 Wangen (DE); Brutscher, Norbert, 88161 Lindenberg (DE)
(74) Vertreter: Laufhütte, Dieter

(56) Entgegenhaltungen:
- EP-A- 1 129 941
- DE-A- 19 935 918
- US-A- 4 352 273
- US-A- 5 214 935
- US-A1- 2002 121 103

## Beschreibung

Die vorliegende Erfindung betrifft einen Kondensor für eine luftgestützte Klimaanlage mit einem Einlass und einem Auslass für die zu kühlende Luft, mit einem Einlass und einem Auslass für die Kühlluft, mit einer Wärmetauschereinheit zum Wärmeübergang zwischen der zu kühlenden Luft und der Kühlluft, mit einem Bypass, der die Wärmetauschereinheit kühlluftseitig zumindest bereichsweise umgeht sowie mit einem Warmlufteinlass auf der Kühlluftseite, mittels dessen Warmluft in den Kondensor einführbar ist.

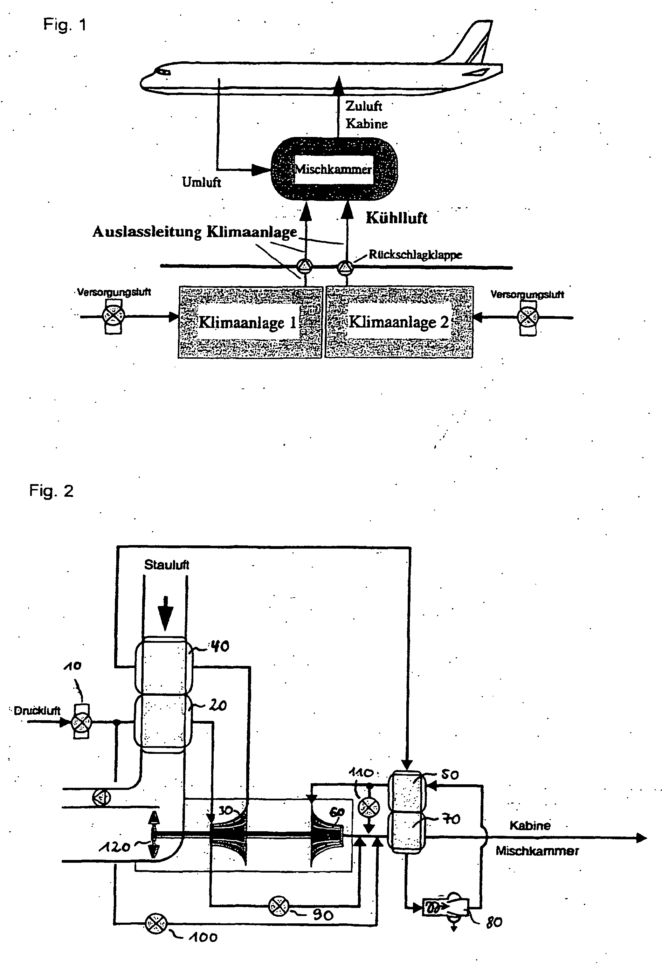

Lüftgestützte Klimaanlagen werden insbesondere in Flugzeugen verwendet, wobei wesentliche Kriterien für die Auslegung dieser Anlagen unter anderem ein geringes Bauvolumen und Gewicht sowie geringe Feuchte der Kühlluft sind. Um Bauvolumen und Gewicht zu minimieren, erfolgt die Auslegung einer Klimaanlage auf eine möglichst geringe Kühlluftmenge. Bei vorgegebener Kühlleistung resultiert dies meist in Kühllufttemperaturen unter dem Gefrierpunkt. Die in der Klimaanlage gekühlte Luft wird mit Umluft aus dem zu kühlenden Raum vermischt, um komfortable. Einblastemperaturen von > 10° C zu erreichen, wie dies schematisch in Figur 1 dargestellt ist. Die aus den Klimaanlagen 1 und 2 austretende Kühlluft wird nach passieren einer Rückschlagklappe in einer Mischkammer mit aus der Kabine des Flugzeuges abgezogener Umluft vermischt und diese Luftmischung sodann der Kabine zugeführt.

Problematisch ist die negative Kühllufttemperatur, die im Auslassbereich zur Bildung von Eis und Schnee führen kann. Dies kann zur Folge haben, dass die Auslassleitung der Klimaanlage zumindest teilweise verstopft und damit die Kühlluftversorgung gefährdet. Es ist daher eine wesentliche Aufgabe einer luftgestützten Klimaanlage eine effektive Entfeuchtung der Kühlluft zu gewährleisten, um einerseits die Möglichkeit für die genannte Eis- und Schneebildung in der Auslassleitung zu vermindern und andererseits eine geringe Raumluft-Feuchte zu erreichen, was einem erhöhten Passagierkomfort entspricht.

Eine ausreichende Entfeuchtung ist nicht nur bei maximaler Kühlleistung der Klimaanlage sondern auch im Teillastbereich erforderlich.

Den Aufbau einer typischen Flugzeugklimaanlage gemäß dem Stand der Technik zeigt Figur 2: der Vorwärmetauscher (PHX) 20 wird warmluftseitig mit heißer Druckluft von den Triebwerken oder einem Hilfsaggregat (ca. 200° C und 3 bar) bei geöffnetem Durchsatzregelventil (FCV) 10 versorgt. In dem Vorwärmetauscher 20 wird die Luft auf ca. 100° C vorgekühlt, wozu Stauluft bzw. Umgebungsluft dient, die durch den Stauluftkanal dem Vorwärmetauscher 20 zugeführt wird. Die aus dem Vorwärmetauscher 20 austretende Luft wird in einem Kompressor 30 weiter verdichtet. Danach folgt eine zweite Abkühlung der Druckluft in dem Hauptwärmetauscher (SHX) 40, der im Stauluftkanal kaltluftseitig stromaufwärts des Vorwärmetauschers angeordnet ist. Hier wird die Luft auf circa 40° C abgekühlt und nachfolgend in einem Wasserabscheidesystem bestehend aus den Komponenten Reheater 50, Kondensor 70 und Wasserabscheider 80 entfeuchtet. Der Kondensor 70 wird auf seiner Niederdruckseite mit kalter Turbinenauslassluft durchströmt, wodurch die Luft auf der warmen Hochdruckseite des Kondensors 70 abkühlt und kondensiert. Das kondensierte Wasser wird in dem Wasserabscheider 80 abgeschieden, der dem Kondensor 70 nachgeschaltet ist. Die auf diese Weise entfeuchtete Luft wird nach passieren des Reheaters 50 sodann in der Turbine 60 entspannt und dabei bis auf ca. -30° C abgekühlt. Die an der Turbine anfallende Wellenleistung wird zum Antrieb des Kompressors 30 und des im Stauluftkanal angeordneten Gebläses 120 verwendet. Vom Turbinenauslass strömt die Luft durch die Niederdruckseite des Kondensors 70 und anschließend in eine Mischkammer bzw. in die Kabine.

Die Temperaturregelung bzw. Regelung der Kühlleistung der Anlage erfolgt durch ein Ventil 90, 100 oder 110, das einen variablen Bypass von verschiedenen Teilen der Klimaanlage ermöglicht. Wird eines der genannten Ventile 90, 100, 110 geöffnet, wird warme Luft (40°C bis 200° C) am Turbinenauslass zugemischt und dadurch die Auslasstemperatur der Klimaanlage geregelt. Wie aus Figur 2 ersichtlich, kann der Abgriff der Bypassluft je nach Bedarf an unterschiedlicher Stelle erfolgen. Ventil 90 ist in einem Bypass angeordnet, der von dem dnsckluftseitigen Auslass des Wärmetauschers 20 ausgeht, Ventil 100 ist in einer Bypassleitung angeordnet, die von dem druckluftseitigen Einlass des Wärmetauschers 20 ausgeht und Ventil 110 befindet sich in einer Bypassleitung, die von dem Turbineneinlass ausgeht.

Sämtliche der genannten Bypassvarianten haben gemeinsam, dass sie Zumischung nach der Turbine 60 bzw. am Einlass der Niederdruckseite des Kondensors 70 erfolgt. Der Grund dafür liegt im wesentlichen darin, dass die Ventile 90, 100, 110 auch dazu benutzt werden, um einen etwaigen Eisaufbau zwischen dem Turbinenauslass und dem Kondensor 70 bzw. in der Niederdruckseite des Kondensors 70 durch kurzzeitiges weites Öffnen des entsprechenden Ventils 90, 100, 110 abzuschmelzen.

Der Kondensor 70 bildet durch Abkühlung der Druckluft Kondensat, das in dem nachgeschalteten Wasserabscheider 80 abgeschieden wird. Zu diesem Zweck wird der Kondensor 70 hochdruckseitig, das heißt auf der Warmluftseite mit vorgekühlter, feuchter Druckluft vom Reheater 50 bzw. Hauptwärmetauscher 40 durchströmt. Auf der Niederdruckseite (kalte Seite) wird er mit kalter Turbinenauslassluft bzw. mit einer Mischung aus Turbinenauslassluft und der mittels der Ventile 90, 100, 110 zugegebenen Warmluft beaufschlagt.

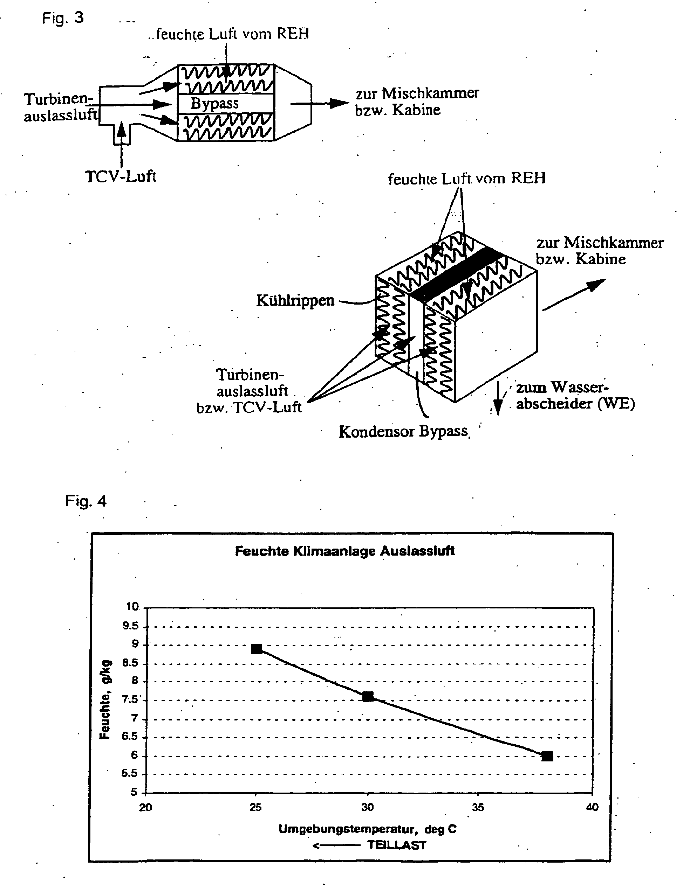

Figur 3 zeigt in unterschiedlichen Ansichten den Aufbau eines derartigen aus dem Stand der Technik (US 4,352,273) bekannten Kondensors. Wie oben ausgeführt, kann aufgrund der Turbinenauslasstemperatur unter dem Gefrierpunkt Eis in der Niederdruckseite des Kondensors 70 auftreten. Damit auch bei extremen Eisaufbau keine Blockade des Kondensors 70 auftritt, ist dieser niederdruckseitig mittig mit einem Bypass versehen. In diesem Teil befinden sich keine Kühlrippen zur Wärmeübertragung, wodurch der Eisaufbau erschwert wird. Sollte trotz des Bypasses eine Blockade auftreten, wird das Eis mittels einer erhöhten Warmluftmenge abgeschmolzen, wozu die Ventile 90, 100, 110 entsprechend geöffnet werden. Der Anteil der Bypass Luft beträt ca. 30 % der gesamten dem Kondensor 70 niederdruckseitig zugeführten Luft.

Wie aus Figur 3 ersichtlich, wird bei dem aus dem Stand bekannten Kondensor 70 die Warmluft im Einlassbereich der Wärmetauschereinheit mit der Turbinenauslasstuft weitgehend vermischt und diese Mischung sodann über den Bypass und die Wärmetauschereinheit verteilt.

Ein damit verbundener Nachteil besteht darin, dass mit dem Öffnen der TCV-Ventile 90, 100, 110, das heißt im Teillastbetrieb der Klimaanlage, der Feuchtegehalt der Klimaanlagen Auslassluft zunimmt. Dies ergibt sich aus Figur 4, aus der hervorgeht, dass mit zunehmenden Teillastbetrieb der Feuchtegehalt der Auslassluft der Klimaanlage ansteigt.

Insbesondere im Teillastbetrieb ist bei einer Auslasstemperatur von ca. -5° C die Gefahr von Eis- und Schneeaufbau am größten, während sie bei starken Kühlbedingungen, das heißt bei geschlossenen TCV-Ventilen deutlich geringer ist. In diesem Fall liegt die Auslasstemperatur der Klimaanlage bei ca. -15° C. Daraus ergibt sich, das insbesondere im Teillastbereich eine besonders geringe Luftfeuchte von Vorteil wäre. Die oben beschriebene Feuchtzunahme tritt bei allen in Figur 2 dargestellten Verschaltungen auf. Die Gründe hierfür sind:
1. Bei jeder TCV-Ventilverschaltung wird die entsprechende Warmluft vor dem niederdruckseitigen Einlass des Kondensors 70 zugemischt und erhöht dadurch die Einlasstemperatur. Die Temperaturerhöhung des Kühlmediums resultiert in einer entsprechend geringeren hochdruckseitigen Abkühlung, was wiederum zur Folge hat, dass weniger Kondensat für die Wasserabscheidung ausfällt, d. h., die der Turbine zugeführte Luft einen höheren Feuchtegehalt aufweist.
2. Bei den Verschaltungen mit den Ventilen 90 und 100 bildet die Warmluft einen Bypass bezüglich Kondensor 70 und Wasserabscheider 80. Daraus ergibt sich, das diese Luft nicht entfeuchtet ist und somit dementsprechend den Feuchtegehalt der Auslassluft erhöht.
3. Bei der Verschaltung mit dem Ventil 110 tritt ein Bypass der Turbine 60 auf, während der Kompressor 30 nach wie vor den gesamten Durchsatz bewältigen muss. Dadurch verschiebt sich die Balance zwischen diesen beiden Rädern der Air-Cycle-Machine, die sich negativ auf den Kompressorwirkungsgrad auswirkt. Damit erhöht sich die Kompressorauslasstemperatur und letztendlich auch das Temperaturniveau im Kondensor (weniger Kondensat). Der abfallende Kompressorwirkungsgrad ergibt als weiteren Nachteil eine reduzierte Durchlässigkeit der Klimaanlage. Dies bedeutet, das trotz Abnahme der Kühlleistung im Teillastbereich der Druckbedarf für die Versorgungsluft hoch bleibt oder sogar zunimmt, während er bei den Verschaltungen mit den Ventilen 90 und 100 mit dem Öffnen des Ventils 90, 100 kontinuierlich abnimmt. Diese höhere Belastung erhöht die Betriebskosten und reduziert die Lebensdauer der Druckluftversorgung. Des weiteren hat diese Verschaltung mit dem Ventil 110 den Nachteil, dass aufgrund der relativ niedrigen Temperatur der Warmluft von nur ca. 40° C keine zuverlässige Enteisung auf der Niederdruckseite des Kondensors 70 möglich ist. Es wäre also ein zusätzliches Ventil notwendig mit den damit verbundenen Nachteilen bezüglich Bauraum, Gewicht und Kosten.

Der vorliegenden Erfindung liegt somit die Aufgabe zu Grunde, die Feuchte der Auslassluft der Klimaanlage auch im Teillastbereich auf einem geringen Niveau zu halten bei nach wie vor hoher Durchlässigkeit der Klimaanlage.

Ausgehend von dem eingangs genannten Kondensor wird diese Aufgabe erfindungsgemäß durch die kennzeichnenden Merkmale des Anspruchs 1 gelöst. Der Warmlufteinlass ist derart angeordnet, dass die Warmluft im wesentlichen in einem Teilbereich des kühlluftseitigen Kondensoreinlasses strömt und dass der Bypass Einlass in dem Teilbereich stromabwärts des Warmlufteinlasses angeordnet ist. Daraus ergibt sich der Vorteil, dass die Warmluft niederdruckseitig im wesentlichen erst im oder nach der Wärmetauschereinheit zugemischt wird. Der Kondensor Bypass, in dem vorteilhaft kein Wärmeaustausch stattfindet, wird somit als integrierte Leitung für die zugeführte Warmluft verwendet. Die eigentliche Vermischung erfolgt niederdruckseitig stromabwärts des kühlluftseitigen Einlasses und vorzugsweise erst im Auslass des Kondensors. Bautechnisch wird die Warmluft niederdruckseitig im Einlassbereich des Kondensor Bypasses zugemischt.

Unter die Erfindung fallen Ausführungsformen, bei denen der Bypass die Wärmetauschereinheit kühlluftseitig vollständig oder nur abschnittsweise umgeht. Entsprechend ergibt sich eine Vermischung in oder nach der Wärmetauschereinheit.

Der Bypass kann im Randbereich des Kondensors angeordnet sein. Auf diese Weise kann erreicht werden, dass der durch den Warmlufteinlass zugeführte Warmluftstrom, der ebenfalls im Randbereich angeordnet sein kann, zuverlässig zum überwiegenden Teil oder vollständig in den Bypass des Kondensors geführt werden kann. Die Warmluft wird in diesem Fall ebenfalls beispielsweise im Randbereich des Kondensors niederdruckseitig im Einlassbereich des seitlich angeordneten Kondensor Bypass zugemischt. Grundsätzlich ist auch jede beliebige andere Anordnung des Bypasses bzw. des Warmlufteinlasses, wie z. B. eine Anordnung in der Mitte des Kondensors, möglich. Dabei kann der Bypass z. B. in der Kondensormitte angeordnet sein und der Warmlufteinlass beispielsweise als mittig in den Einlassbereich des Kondensors mündender Rohrstutzen ausgeführt sein.

Der Bypass kann integraler Bestandteil des Kondensors sein sein.

Vorteilhaft ist es, wenn der Warmlufteinlass und der Einlass des Bypasses derart zueinander ausgerichtet sind, dass der Warmluftstrom vollständig durch den By-pass geführt wird. Damit werden besonders wirksam die aus dem Stand der Technik bekannten Nachteile vermieden, die sich beispielsweise daraus ergeben, dass eine intensive Vermischung der Warmluft mit der Kühlluft auf der Einlassseite der Wärmetauschereinheit statt findet.

Alternativ kann vorgesehen sein, dass der Warmlufteinlass und der Einlass des Bypass derart zueinander ausgerichtet sind, das der Warmluftstrom überwiegend durch den Bypass geführt wird. In diesem Fall strömt ein geringer Teil des Warmluftstromes durch die Wärmetauschereinheit.

Es kann vorgesehen sein, dass der Bypass im Randbereich der Wärmetauscheinheit angeordnet ist und dass zwischen der Außenwand der Wärmetauschereinheit und der Wandung des Bypass ein mit zu kühlender Luft durchströmbarer Bereich angeordnet ist. Auf diese Weise kann der Bypass auf seinen beiden Seiten zur Verhinderung von Eisaufbau beheizt werden, wobei als Heizmedium die zu kühlende Luft dient.

In weiterer Ausgestaltung der Erfindung ist vorgesehen, dass zwei oder mehr Bypässe vorgesehen sind, die jeweils im Randbereich des Kondensors angeordnet sind. Die Bypässe können auch mittig im Kondensor oder auch zum Teil mittig und zum Teil im Randbereich angeordnet sein. Grundsätzlich sind beliebige Gestaltungsmöglichkeiten denkbar, so z. B. auch eine Anordnung eines, mehrerer oder aller Bypässe im Bereich zwischen Kondensormitte und - randbereich.

Es können ein oder mehrere Ventile vorgesehen sein, mittels derer der Volumenstrom der dem oder den Bypässen jeweils zugeführten Warmluft veränderbar ist. Entsprechendes gilt selbstverständlich auch dann, wenn nur ein Bypass vorgesehen ist. Auch in diesem Fall kann ein Ventil vorgesehen sein, mittels dessen der Volumenstrom der durch die Warmluftleitung in den Einlassbereich geführten Warmluft veränderbar ist. Ist das entsprechende Ventil geschlossen, wird die Anlage mit maximaler Kühlleistung betrieben, da keine Warmluft zugemischt wird. In diesem Fall erfüllt der Bypass seine bereits aus dem Stand der Technik bekannte Funktion. Die Turbinenauslassluft strömt teilweise durch die Wärmeaustauschfläche und teilweise durch den Bypass. Je nach Ventilstellung kann nun die Warmluft zugemischt werden, wobei diese entsprechend der erfindungsgemäßen Anordnung ausschließlich oder überwiegend durch den Bypass strömt, während die Kühlluft zum überwiegenden Teil durch die Wärmetauschereinheit strömt.

Der oder die Ventile können in die Wärmetauschereinheit integriert sein.

In weiterer Ausgestaltung der vorliegenden Erfindung ist vorgesehen, das ein Wasserabscheider in den Auslass der Kühlluft oder der zu kühlenden Luft integriert ist.

Die Wärmetauschereinheit kann als Kreuzströmer, Gegenströmer oder Gleichströmer ausgeführt sein.

Weitere Einzelheiten und Vorteile der Erfindung werden anhand eines in der Zeichnung dargestellten Ausführungsbeispiels näher erläutert. Es zeigen:
- Figur 1:: Schematische Darstellung einer Flugzeug-Klimaanlage mit Mischkammer,
- Figur 2:: schematische Darstellung einer Flugzeugklimaanlage mit unterschiedlichen Bypassanordnungen gemäß dem Stand der Technik,
- Figur 3:: Aufbau eines Kondensors gemäß dem Stand der Technik,
- Figur 4:: Abhängigkeit der Feuchte der Auslassluft der Klimaanlage von der Last über den Arbeitsbereich,
- Figur 5:: schematische Darstellung der Flugzeugklimaanlage mit Bypass Schaltung gemäß der vorliegenden Erfindung,
- Figur 6:: unterschiedliche Darstellungen des Kondensors gemäß der vorliegenden Erfindung,
- Figur 7:: Abhängigkeit der Feuchte der Auslassluft der Klimaanlage von der Last über den Arbeitsbereich gemäß dem Stand der Technik und der vorliegenden Erfindung,
- Figur 8:: Luftaufteilung im Kondensor gemäß der vorliegenden Erfindung und
- Figur 9:: Kondensor gemäß der vorliegenden Erfindung mit seitlich angeordnetem Bypass und beheizter Außenwand.

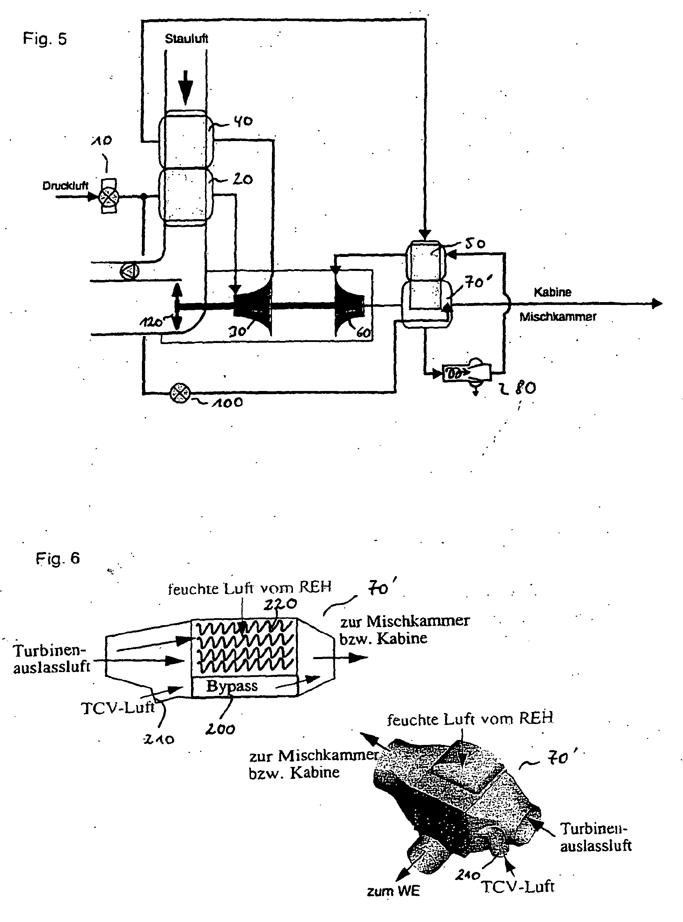

Figur 5 zeigt eine schematische Darstellung einer Flugzeugklimaanlage. Gleiche Teile sind hier mit gleichen Bezugszeichen versehen wie bei der Darstellung gemäß Figur 2.

Die Warmluft wird von der warmluftseitigen Einlassseite des Primärwärmetauschers 20 abgezogen und über das Ventil 100 dem Kondensor 70' zugeführt. Der Kondensor 70' weist den aus Figur 6 ersichtlichen Aufbau auf. Der in dem Kondensor 70' angeordnete Bypass 200 ist derart angeordnet, dass die in den Kondensor 70' über den Warmlufteinlass 210 einströmende Luft ausschließlich oder zu einem überwiegenden Teil durch den Bypass 200 geführt wird. Der Bypass 200 ist im Randbereich des Kondensors 70' angeordnet und befindet sich somit seitlich bzw. unterhalb der Wärmetauschereinheit 220. Der Bypass kann auch an anderer Stelle des Kondensors, beispielsweise mittig oder in einem Bereich zwischen der Kondensormitte und dem Randbereich angeordnet sein. Entsprechendes gilt für den Warmlufteinlass. Grundsätzlich können auch mehrere Bypässe und/oder mehrere Warmlufteinlässe vorgesehen sein, die ebenfalls an beliebiger Stelle in dem Kondensor angeordnet sein können.

Ist das Ventil 100 geöffnet, strömt durch den Warmlufteinlass 210 Warmluft (TCV-Luft) in den Kondensor 70' und wird sodann aufgrund der fluchtenden Anordnung von Warmlufteinlass 210 und Einlass des Bypass 200 in den Bypass 200 geführt. Die Durchströmung des Kondensors 70' mit Warmluft findet gemäß Figur 6, obere Darstellung, im Bypass 200 des Kondensors 70' statt. In bevorzugter Ausgestaltung der Erfindung findet in dem Bypass 200 kein Wärmeaustausch statt. Die Warmluft wird bautechnisch niederdruckseitig im Einlassbereich des seitlich angeordneten Bypass 200 zugemischt. Der Kondensor Bypass 200 wird als integrierte Leitung für die Warmluft verwendet. Die eigentliche Vermischung mit der Kühlluft, die bei geöffnetem Ventil 100 zu dem überwiegenden Teil oder ausschließlich durch die Wärmetauscheinheit 220 strömt, erfolgt in der Auslassseite der Wärmetauschereinheit 220. Erst in diesem Bereich wird die Warmluft mit der die Wärmetauschereinheit 220 verlassenden Kühlluft vermischt. Grundsätzlich ist es ebenfalls möglich, die Bypassleitung so auszuführen, dass sie nicht die gesamte Wärmetauschereinheit 220, sondern nur einen Teilbereich davon umgeht und im Bereich der Wärmetauschereinheit 220 mündet.

Wie aus Figur 6 ersichtlich, wird als Kühlluft die Auslassluft der Turbine 60 gemäß Figur 5 verwendet. Die Warmluft wird von der Einlassseite des Primärwärmetauschers 20 abgeführt. Der kaltluftseitige Auslass des Kondensors 70' steht mit der Mischkammer bzw. Kabine des Flugzeuges in Verbindung. Das zu kühlende Medium besteht aus feuchter Luft vom Reheater 50. Nach Passieren des Kondensors 70' wird diese Luft zum Wasserabscheider 80 geführt.

Die vorliegende Erfindung bietet folgende Vorteile:

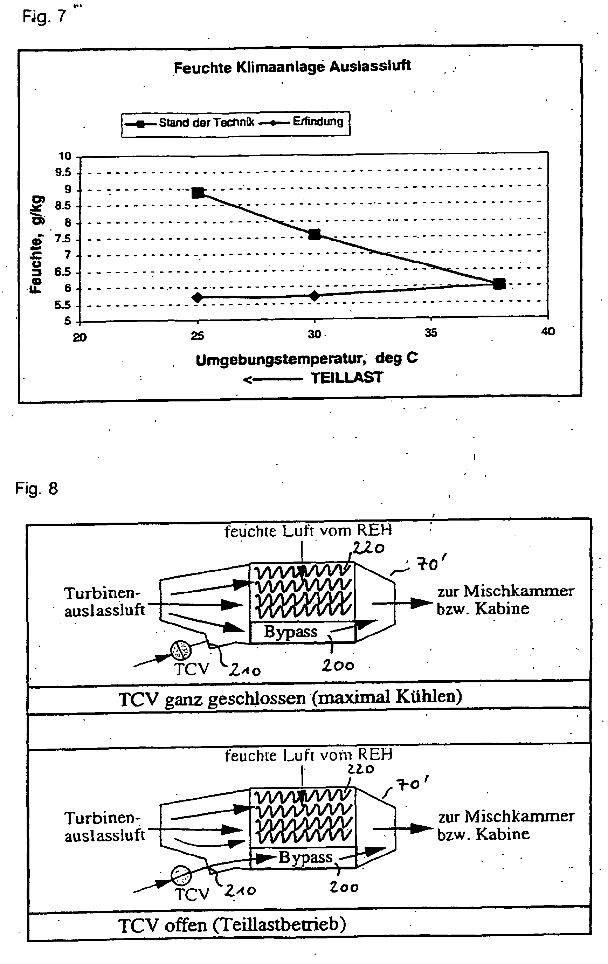

Wie aus Figur 7 ersichtlich, bleibt die Feuchte der Auslassluft der Klimaanlage auch im Teillastbereich, bei teilweise oder vollständig geöffnetem Ventil 100 auf dem niedrigen Niveau des maximalen Kühlfalles. Daraus ergeben sich entsprechende Vorteile für den Passagierkomfort und die Vereisungsgefahr.

Als Hauptgründe hierfür sind zu nennen:
1. Die warme durch den Einlass 210 eingeführte TCV-Luft wird thermodynamisch niederdruckseitig vorzugsweise erst nach dem Kondensor 70' zugemischt. Dadurch ergibt sich auch im Teillastbereich eine hohe Wärmeübertragung im Kondensor 70' und damit hohe Kondensatbildung für die Wasserabscheidung.
2. In Klimaanlagen nach dem Stand der Technik ist die Luftaufteilung, zwischen dem Kondensor Bypass und Kühlrippen im wesentlichen konstant (ca. 30% Bypass). Diese Luftaufteilung ist gemäß der vorliegenden Erfindung jedoch variabel, wodurch sich entsprechende Vorteile hinsichtlich Kondensatbildung und Wasserabscheidung ergeben. Wie aus Figur 8 ersichtlich, ergeben sich unterschiedliche Betriebsweisen des erfindungsgemäßen Kondensors 70'. Solange das Ventil 100 geschlossen ist, ergeben sich keine Unterschiede zum Stand der Technik, das heißt zum Beispiel 30% der Turbinenauslassluft strömt durch den Bypass 200, während circa 70% der Luft durch die Kühlrippen der Wärmetauschereinheit 220 strömt. Der Bypass 200 erfüllt in diesem Betriebszustand die selbe Funktion wie gemäß dem Stand der Technik.
   Wird das Ventil 100 geöffnet, strömt die durch den Warmlufteinlass 210 in den Kondensor 70' eintretende Warmluft direkt zum Einlass des Kondensor Bypass 200. Die Strömung der Turbinenauslassluft wird dabei so beeinflusst, dass weniger Turbinenluft in den Bypass 200 und mehr durch die Kühlrippen der Wärmetauschereinheit 210 strömt. Zumindest ein Teil des Bypass 200 ist somit von Warmluft belegt. Der im Vergleich zum Stand der Technik höhere Anteil der Turbinenluft, die niederdruckseitig in den Kondensor 70' strömt, ergibt ein günstigeres Massenstromverhältnis von heißer zu kalter Kondensorluft und damit einen höheren Kondensor-Wirkungsgrad mit den entsprechenden Vorteilen für die Kondensatbildung / Wasserabscheidung.

Ein weiterer Vorteil der vorliegenden Erfindung besteht in einer kompakten und leichten Bauweise des Kondensors 70' und damit der Klimaanlage, da der Bypass 200 als integrierte Leitung genutzt werden kann. Damit ist in dieser Ausführungsform keine Leitungsführung um den Kondensor 70' notwendig.

Eine Anordnung der Warmluft-Zuführung im Einlassbereich des Kondensor Bypass 200 ermöglicht auch eine Enteisung desselben. Somit ist in der Regel auch kein zweites Ventil für etwaige Enteisungsvorgänge notwendig, was mit entsprechenden Vorteilen hinsichtlich Gewicht, Bauraum und Kosten verbunden ist.

Im Gegensatz zu der Bypassanordnung mit dem Ventil 110 gemäß Figur 2 wird das Teillastbetriebsverhalten der Air-Cycle-Machine ACM, die gemäß Figur 2 und 5 als Drei-Rad-Maschine ausgeführt ist, (Kompressor Wirkungsgrad) nicht nachteilig beeinflusst, weil hier ein Bypass von Kompressor und Turbine stattfindet. Damit sind beide Räder auch im Teillastbetrieb mit der gleichen Luftmenge beaufschlagt. Auch im Teillastbetrieb arbeitet der Kompressor mit hohem Wirkungsgrad. Die Druckluftversorgung wird somit entlastet, was in geringeren Betriebskosten und einer höheren Lebenserwartung resultiert.

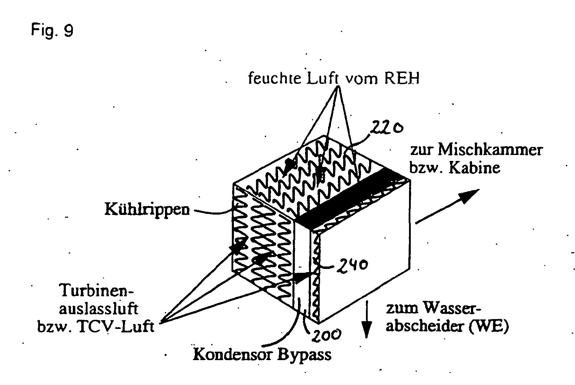

Figur 9 zeigt eine weitere Ausführungsform des erfindungsgemäßen Kondensors. Hier befindet sich zwischen dem Bypass 200 und der Außenseite der Wärmetauschereinheit 220 ein von zu kühlender wärmerer Luft durchströmter Bereich 240.

Dadurch ergibt sich der Vorteil, dass beide Seiten des Bypass 200 zur Verhinderung von Eisaufbau beheizt sind.

Die vorliegende Erfindung ermöglicht es, den Feuchte-Gehalt der Klimaanlagen Auslassluft auch im Teilbereich gering zu halten, was dadurch erreicht wird, dass die zugeführte Warmluft nicht bereits im Einlassbereich der Wärmetauschereinheit vollständig mit der Turbinenauslassluft vermischt wird. Besonders vorteilhaft ist es, wenn der Bypass des Kondensors zur Zumischung der Warmluft verwendet wird. Diese strömt im Teillastbetrieb im wesentlichen durch den Bypass des Kondensors und wird vorzugsweise im Ausfassbereich der Wärmetauschereinheit mit der Kühlluft vermischt. Bei maximaler Kühlleistung wird der Bypass von Kühlluft beaufschlagt.

## Patentansprüche

1. Kondensor für eine luftgestützte Klimaanlage mit einem Einlass und einem Auslass für die zu kühlende Luft, mit einem Einlass und einem Auslass für die Kühlluft, mit einer Wärmetauschereinheit zum Wärmeübergang zwischen der zu kühlenden Luft und der Kühlluft, mit einem Bypass, der die Wärmetauschereinheit kühlluftseitig zumindest bereichsweise umgeht sowie mit einem Warmlufteinlass auf der Kühlluftseite, mittels dessen Warmluft in den Kondensor einführbar ist,
**dadurch gekennzeichnet,**
**daß** der Bypasseinlass stromabwärts des Warmlufteinlasses angeordnet ist und daß der Warmlufteinlass und der Bypasseinlass miteinander fluchten, so dass der mittels des Warmlufteinlasses zugeführte Warmluftstrom vollständig oder überwiegend durch den Bypass geführt wird.

2. Kondensor nach Anspruch 1, **dadurch gekennzeichnet, daß** der Bypass im Randbereich des Kondensors oder mittig oder in einem zwischen diesen Positionen liegenden Bereich angeordnet ist.

3. Kondensor nach Anspruch 1 oder 2, **dadurch gekennzeichnet, daß** der Bypass integraler Bestandteil des Kondensors ist.

4. Kondensor nach einem der Ansprüche 1 bis 3, **dadurch gekennzeichnet, daß** der Bypass im Randbereich der Wärmetauschereinheit angeordnet ist und daß zwischen der Außenwand der Wärmetauschereinheit und der Wandung des Bypass ein mit zu kühlender Luft durchströmbarer Bereich angeordnet ist.

5. Kondensor nach einem der Ansprüche 1 bis 4, **dadurch gekennzeichnet, daß** zwei oder mehr Bypässe vorgesehen sind, die jeweils im Randbereich des Kondensors angeordnet sind.

6. Kondensor nach einem der Ansprüche 1 bis 5, **dadurch gekennzeichnet, daß** ein oder mehrere Ventile vorgesehen sind, mittels derer der Volumenstrom der dem oder den Bypässen jeweils zugeführten Warmluft veränderbar ist.

7. Kondensor nach Anspruch 6, **dadurch gekennzeichnet, daß** das oder die Ventile in die Wärmetauschereinheit integriert sind.

8. Kondensor nach einem der Ansprüche 1 bis 7, **dadurch gekennzeichnet, daß** ein Wasserabscheider vorgesehen ist, der in den Auslass der Kühlluft oder der zu kühlenden Luft integriert ist.

9. Kondensor nach einem der Ansprüche 1 bis 8, **dadurch gekennzeichnet, daß** die Wärmetauschereinheit als Kreuzströmer, Gegenströmer oder Gleichströmer ausgeführt ist.

## Revendications

1. Condenseur pour une installation de climatisation à base d'air avec une entrée et une sortie pour l'air à refroidir, avec une entrée et une sortie pour l'air de refroidissement, avec un échangeur de chaleur pour le transfert de chaleur entre l'air à refroidir et l'air de refroidissement, avec une dérivation, qui contourne au moins par endroits l'échangeur de chaleur côté air de refroidissement et avec une entrée d'air chaud du côté air de refroidissement, au moyen de laquelle de l'air chaud peut être introduit dans un condenseur,
**caractérisé en ce que**
l'entrée de dérivation est disposée en aval de l'entrée d'air chaud et **en ce que** l'entrée d'air chaud et l'entrée de dérivation sont alignées entre elles, de sorte que le flux d'air chaud amené au moyen de l'entrée d'air chaud est guidé complètement ou principalement à travers la dérivation.

2. Condenseur selon la revendication 1, **caractérisé en ce que** la dérivation est disposée dans la zone périphérique du condenseur ou au centre ou dans une zone située entre ces positions.

3. Condenseur selon la revendication 1 ou 2, **caractérisé en ce que** la dérivation est un composant intégral du condenseur.

4. Condenseur selon l'une quelconque des revendications 1 à 3, **caractérisé en ce que** la dérivation est disposée dans la zone périphérique de l'échangeur de chaleur et **en ce qu'**une zone pouvant être parcourue par de l'air à refroidir est disposée entre la paroi extérieure de l'échangeur de chaleur et la paroi de la dérivation.

5. Condenseur selon l'une quelconque des revendications 1 à 4, **caractérisé en ce qu'**il est prévu deux dérivations ou plus, qui sont disposées chacune dans la zone périphérique du condenseur.

6. Condenseur selon l'une quelconque des revendications 1 à 5, **caractérisé en ce qu'**il est prévu une ou plusieurs vannes au moyen desquelles le flux volumique de l'air chaud amené respectivement à la dérivation ou à chacune des dérivations peut être modifié.

7. Condenseur selon la revendication 6, **caractérisé en ce que** la ou les vannes sont intégrées dans l'échangeur de chaleur.

8. Condenseur selon l'une quelconque des revendications 1 à 7, **caractérisé en ce qu'**il est prévu un séparateur d'eau qui est intégré dans la sortie de l'air de refroidissement ou de l'air à refroidir.

9. Condenseur selon l'une quelconque des revendications 1 à 8, **caractérisé en ce que** l'échangeur de chaleur est réalisé sous la forme d'un échangeur à courants croisés, d'un échangeur à contre-courant ou d'un échangeur à courant continu.

## Claims

1. Condenser for an air-assisted air-conditioning system having an inlet and an outlet for the air which is to be cooled, having an inlet and an outlet for the cooling air, having a heat exchanger unit for transferring heat between the air that is to be cooled and the cooling air, having a bypass, which bypasses the heat exchanger unit at least in regions on the cooling air side, and having a warm air inlet on the cooling air side, by means of which warm air can be introduced into the condenser, **characterized in that** the bypass inlet is arranged downstream of the warm air inlet, and **in that** the warm air inlet and the bypass inlet are aligned with one another, so that the warm air stream which is supplied by means of the warm air inlet is passed completely or predominantly through the bypass.

2. Condenser according to Claim 1, **characterized in that** the bypass is arranged in the edge region of the condenser or centrally or in a region lying between these two positions.

3. Condenser according to Claim 1 or 2, **characterized in that** the bypass is an integral part of the condenser.

4. Condenser according to one of Claims 1 to 3, **characterized in that** the bypass is arranged in the edge region of the heat exchanger unit, and **in that** a region through which air that is to be cooled can flow is arranged between the outer wall of the heat exchanger unit and the wall of the bypass.

5. Condenser according to one of Claims 1 to 4, **characterized in that** two or more bypasses are provided, each arranged in the edge region of the condenser.

6. Condenser according to one of Claims 1 to 5, **characterized in that** one or more valves are provided, by means of which the volumetric flow of the warm air which is in each case fed to the bypass or bypasses can be altered.

7. Condenser according to Claim 6, **characterized in that** the valve(s) is/are integrated in the heat exchanger unit.

8. Condenser according to one of Claims 1 to 7, **characterized in that** there is a water separator which is integrated in the outlet of the cooling air or of the air that is to be cooled.

9. Condenser according to one of Claims 1 to 8, **characterized in that** the heat exchanger unit is designed as a cross-current heat exchanger, as a countercurrent heat exchanger or as a co-current heat exchanger.
